(19) Europäisches Patentamt / European Patent Office / Office européen des brevets

(11) **EP 4 668 728 A1**

(12) **EUROPEAN PATENT APPLICATION**

(43) Date of publication:
**24.12.2025 Bulletin 2025/52**

(21) Application number: **25178910.3**

(22) Date of filing: **27.05.2025**

(51) International Patent Classification (IPC):
*H04N 1/54* *(2006.01)*

(52) Cooperative Patent Classification (CPC):
**H04N 1/54**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **20.06.2024 JP 2024099805**

(71) Applicant: **Ricoh Company, Ltd.**
**Tokyo 143-8555 (JP)**

(72) Inventor: **Matsushima, Yuki**
**Tokyo, 143-8555 (JP)**

(74) Representative: **SSM Sandmair**
**Patentanwälte Rechtsanwalt**
**Partnerschaft mbB**
**Joseph-Wild-Straße 20**
**81829 München (DE)**

(54) **IMAGE PROCESSING SYSTEM, OUTPUT PROFILE, IMAGE OUTPUT DEVICE, IMAGE PROCESSING METHOD, AND CARRIER MEDIUM**

(57) An image processing system (1000) includes an acquisition unit (202), an input profile specification unit (201), an output profile specification unit (201), a generation unit (203), and an image output apparatus (400). The acquisition unit (202) acquires print data of CMYK or RGB without a spot color specification. The input profile specification unit (201) specifies an input profile to convert the print data into a color value in a device-independent space. The output profile specification unit (201) specifies an output profile for a metallic colorant. The generation unit (203) separates the print data into five or more plates including the metallic colorant based on the specified input profile and the specified output profile to generate data for a printed material. The image output apparatus (400) outputs the printed material.

## FIG. 1

EP 4 668 728 A1

**Description**

BACKGROUND

Technical Field

The present disclosure relates to an image processing system, an output profile, an image output device, an image processing method, and a carrier medium.

Related Art

In recent electronic photography, colorants of special colors have been used in addition to cyan, magenta, yellow, and black (CMYK) colorants to expand color expression. For example, a glossy color image can be formed with colorants of metallic colors or metallic luster colors such as gold toner and silver toner, or brilliant colorants such as a pearl colorant and a mica colorant.

Offset printing with photoluminescent colorants has been the mainstream for metallic colors.

In offset printing, color sample patches are commercially available for the purpose of printing with ideal metallic colors. When a user specifies a spot color with a color sample patch, colorants are mixed and prepared for reproduction of the color sample patch. Printing companies perform printing with such mixed colorants. A color registered in a commercially available color sample patch may be referred to as a spot color in the following description.

For example, Japanese Unexamined Patent Application Publication No. 2022-178256 discloses an example in which metallic toner is used according to the amount of CMYK toners to increase the metallic effect of highlights.

In electrophotography, similar to offset printing, there is a system where spot colors are specified for objects in image data, and an image forming apparatus separates the data into five plates. However, this system requires special image editing tools such as Photoshop and skills, which is a burden on the print ordering side. In addition, the spot color specification is generally "solid," which is not suitable for the gradation expression. Even when no spot color is specified, it takes a lot of time and effort to simply generate, for example, a plate to which a silver plate is uniformly applied.

In electrophotography, different color toner layers are superimposed one atop another to form an image, allowing on-demand printing without mixing colorants as in offset printing, which is an advantage. However, metallic toner that typically uses metal in the toner material has higher opacity than process color toner that uses pigments. Accordingly, in color mixing with process color, metallic toner is placed on the lowermost layer closest to a sheet. Even in such a case, the silver toner color in the lower layer is covered and shielded by the color of process color toner in the upper layer, and a desired metallic effect may not be reproduced. In other words, in the case of a shadow color or a high-saturation color in which a large amount of process toner is placed in the upper layer, using metallic toner, which is expensive, is not that effective and the cost is not worth it.

To facilitate printing in metallic colors, it is preferable to use a five-color output profile for metallic colors and perform conversion on the printer, instead of specifying spot colors in image data. Although the above technique generates a five-color output profile, the five-color output profile is not in line with the workflow actually performed by the user at the time of printing.

For example, the technique disclosed in Japanese Unexamined Patent Application Publication No. 2022-178256 has not achieved metallic printing in combination with an input profile, that is, generating an output profile in consideration of an actual user flow.

SUMMARY

The present disclosure described herein provides an image processing system including an acquisition unit, an input profile specification unit, an output profile specification unit, a generation unit, and an image output apparatus. The acquisition unit acquires print data of cyan, magenta, yellow, and black (CMYK) or red, green, and blue (RGB) without a spot color specification. The input profile specification unit specifies an input profile to convert the print data into a color value in a device-independent space. The output profile specification unit specifies an output profile for a metallic colorant. The generation unit separates the print data into five or more plates including the metallic colorant based on the specified input profile and the specified output profile to generate data for a printed material. The image output apparatus outputs the printed material.

The present disclosure described herein provides an output profile generated by the image processing system described above.

The present disclosure described herein provides an image output apparatus including an acquisition unit, an input profile specification unit, an output profile specification unit, and a generation unit. The acquisition unit acquires print data of CMYK or RGB without a spot color specification. The input profile specification unit specifies an input profile to convert the print data into a color value in a device-independent space. The output profile specification unit specifies an output profile for a metallic colorant. The generation unit separates the print data into five or more plates including the metallic colorant based on the specified input profile and the specified output profile to generate data for a printed material.

The present disclosure described herein provides an image processing method including: acquiring print data of CMYK or RGB without a spot color specification, specifying an input profile to convert the print data into a color value in a device-independent space, specifying an output profile for a metallic colorant, and separating the print data into five or more plates including the metallic colorant based on the specified input profile and the specified output profile to generate data for a printed material.

The present disclosure described herein provides a carrier medium carrying computer-readable code for controlling a computer system to carry out a method. The method includes acquiring print data of CMYK or RGB without a spot color specification, specifying an input profile to convert the print data into a color value in a device-independent space, specifying an output profile for a metallic colorant, and separating the print data into five or more plates including the metallic colorant based on the specified input profile and the specified output profile to generate data for a printed material.

According to one aspect of the present disclosure, an output profile for metallic colors can be used in an actual user flow of metallic color printing in combination with an input profile.

BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:

FIG. 1 is a diagram illustrating a configuration of an image processing system according to a first embodiment of the present disclosure;

FIG. 2 is a flowchart illustrating actual printing with a five-color output profile in the image processing system according to the first embodiment;

FIG. 3 is a flowchart illustrating a process for generating a five-color output profile in the image processing system according to the first embodiment;

FIG. 4 is a diagram illustrating a hardware configuration of an image forming apparatus in an image processing system according to the first embodiment;

FIG. 5 is a diagram illustrating a hardware configuration of a measuring unit of the image processing system according to the first embodiment;

FIG. 6 is a diagram illustrating a functional configuration of a processing unit related to the generation of a five-color output profile in the image processing system according to the first embodiment;

FIG. 7 is a diagram illustrating a color prediction model generated in the image processing system according to the first embodiment;

FIG. 8 is a diagram illustrating a profile generation process in the image processing system according to the first embodiment;

FIG. 9 is a diagram illustrating grid points represented by Lab coordinates in a Profile Connection Space (PCS) of a B-to-A (B2A) table generated in the image processing system according to the first embodiment;

FIG. 10 is a diagram illustrating the setting of a target metallic value in a Lightness Chroma (LC) plane in the image processing system according to the first embodiment;

FIG. 11 is a flowchart illustrating a process performed by a search unit in the image processing system according to the first embodiment;

FIG. 12 is a diagram illustrating a part of a functional configuration of a controller of the image processing system according to the first embodiment; and

FIG. 13 is a diagram illustrating a user interface (UI) in an image processing system according to a second embodiment of the present disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below.

As used herein, the singular forms "a," "an," and "the" are intended to include the plural forms as well, unless the context clearly indicates otherwise. The term "connected/coupled" includes both direct connections and connections in which there are one or more intermediate connecting elements.

For the sake of simplicity, identical or similar reference numerals denote identical or similar elements such as parts and materials having the same functions, and redundant descriptions thereof are omitted unless otherwise required.

In the following description, suffixes Y, M, C, and K denote colors of white, yellow, magenta, cyan, and black, respectively, whereas suffixes R, G, and B denote colors of red, green, and blue. To simplify the description, these suffixes are omitted unless necessary.

An output profile, an image output device, an image processing method, and a program are described below in detail with reference to the accompanying drawings.

A description is given below of several objects of the present embodiment. The present embodiment has two objects described below. The first object is to facilitate metallic printing, which is printing with metallic colorants without a spot color specification, particularly to perform metallic printing in substantially the same workflow as process color printing. The second object is to balance the quality and cost of printing in mixed colors with process toner and metallic toner in electrophotography.

The first object is described below in detail. Typical input data in printing companies is image data of CMYK or RGB with no spot color specification. To facilitate metallic printing based on such image data, an image forming apparatus preferably performs color separation based on the profile, as in a workflow of process color printing.

Since typical methods of generating an output profile in five colors and color conversion methods assume a device link profile, using such methods is difficult when the input image data is RGB data. An output profile in five colors may be referred to as a five-color output profile in the following description. In color conversion using a device link profile in printing, an input profile and an output profile are desirably used and combined in the PCS. The present embodiment can accommodate such a workflow. A device link profile may be referred to simply as a profile in the following description.

The profile is described below. An International Color Consortium (ICC) profile typically used for color management is data representing a relationship between a device-dependent color and a device-independent color of a printer. The device-dependent color is represented by a coordinate value of a device-dependent color space. For example, the device-dependent color is represented by a CMYK value representing the amount of use of C, M, Y, and K. The device-independent color is represented, for example, by color values in device-independent color spaces such as the CIE Lab color space or the CIE XYZ color space, where CIE stands for Commission Internationale de l'Éclairage (International Commission on Illumination), and Lab refers to the Lab* color space, where: L* represents Lightness, a* represents the Green-Red axis, and b* represents the Blue-Yellow axis.

The ICC profile includes an input profile and an output profile. The input profile has an A-to-B (A2B) table. For example, the A2B table can convert CMYK values defined by Japan Color into color values of the device-independent PCS such as Lab values according to an input profile. Such conversion is called A2B conversion. In other words, the input profile is an example of an input profile to convert a print job, which is an example of print data, into a color value in a device-independent space.

By contrast, the output profile has a B2A table. For example, the B2A table can convert device-independent color values into device-dependent CMYK values, which may be referred to as device values, for a printer such as an electrophotographic printer. Such conversion is called B2A conversion. In other words, the output profile is an example of an output profile for metallic colorants.

In the case of process colors, the B2A table contains the relationship between the CMYK values at the grid points and the Lab values (colorimetric values) obtained by measuring a printed color produced using specific CMYK values. The Lab values are values obtained by using diffuse reflected light (0 / 45). However, when an object to be measured is a metallic printed material, colorimetric values that match visual observation are physical quantities including diffuse reflected light and specular reflected light. A detailed description thereof is deferred. Thus, the device values for acquiring a metallic patch color are acquired using the diffuse reflected light and the specular reflected light.

For metallic printing from typical input data described above, the values of the output profile in the PCS preferably correspond to the Lab values in process color. In other words, in the case of the five-color output profile for metallic, the Lab values of the B2A table may not be colorimetric values obtained by printing with device values, which are CMYK + Si values. Si represents silver and may be referred to as Si in the following description.

The second object is described below in detail. The metallic toner is not used for a color such as a shadow color or high-saturation color where a desired metallic effect is not reproduced because a silver toner color in the lower layer is covered and shielded by the color of process color toner in the upper layer, or a large amount of process toner is placed on the upper layer.

First Embodiment

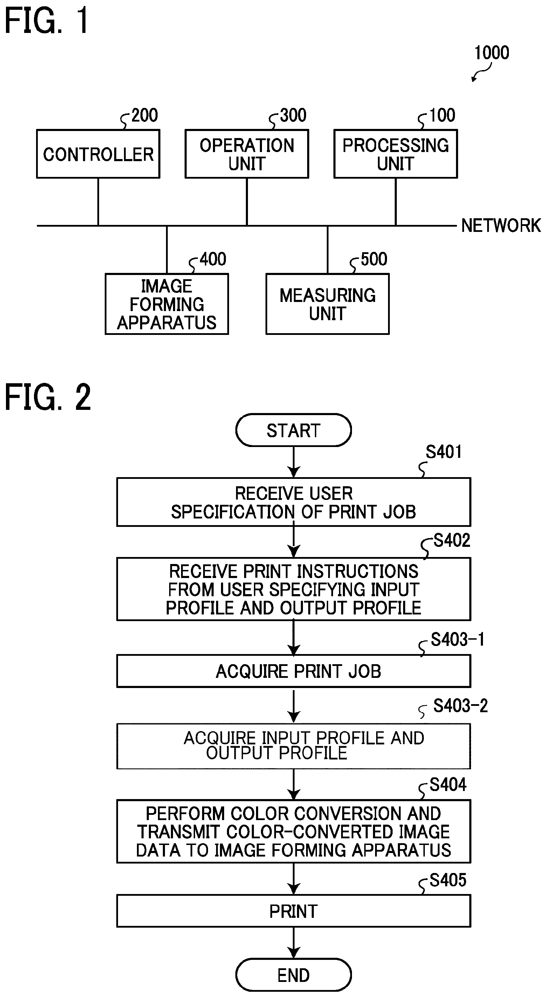

A description is given below of generating a five-color output profile, which is an ICC profile of five plates in CMYK process colors and silver. The characteristics of a reproduction target value include a color and a metallic effect. The physical quantity of the color is represented by a color value. The physical quantity of the metallic effect is represented by a metallic value. The reproduction printer is an image forming apparatus 400 described below with reference to FIG. 1.

The device values of the reproduction printer to be acquired are C, M, Y, K, and Si (metallic silver) values. In the following description, "high metallicity" or "high metallic value" means "high brightness" whereas "high chromaticity" or "high color value" means "high saturation" or "deep."

FIG. 1 is a diagram illustrating a configuration of an image processing system 1000 according to the first embodiment. The image processing system 1000 is an example of an image processing system that generates and prints plates with five or more colors including a metallic colorant from an input image that has continuously changing gradation. As illustrated in FIG. 1, the image processing system 1000 includes a processing unit 100, a controller 200, an operation unit 300, the image forming apparatus 400, and a measuring unit 500. These components are connected to each other through a control bus or a network. The image forming apparatus 400 is an example of an image output apparatus that outputs a printed material.

The operation unit 300 receives user instructions through devices such as a keyboard, mouse, and display, and displays a state. Specifically, the user gives print instructions by specifying an input image, an input profile, and an output profile for actual printing through the operation unit 300. The operation unit 300 is implemented by, for example, a control panel.

At the time of actual printing, the controller 200 receives a print job from the processing unit 100, performs color conversion based on the input profile and the output profile, and transmits the color conversion result to the image forming apparatus 400 to give instructions such as a print instruction. The print job is an example of print data of CMYK or RGB without a spot color specification. In other words, the controller 200 functions as an example of an acquisition unit that acquires print jobs. The controller 200 transmits a chart for generating a five-color output profile to the image forming apparatus 400 and gives instructions such as a print instruction. The controller 200 is implemented by, for example, control circuitry.

The image forming apparatus 400 receives instructions such as a print instruction from the controller 200 and prints an image.

The measuring unit 500 measures multiple colorimetric values for (metallic) patches on a printed (metallic) chart for generating a five-color output profile and transmits the data to the processing unit 100.

The processing unit 100 receives the colorimetric values from the measuring unit 500, generates a five-color output profile including device values of five colors including silver, and transmits the profile to the controller 200. The processing unit 100 is implemented by, for example, processing circuitry.

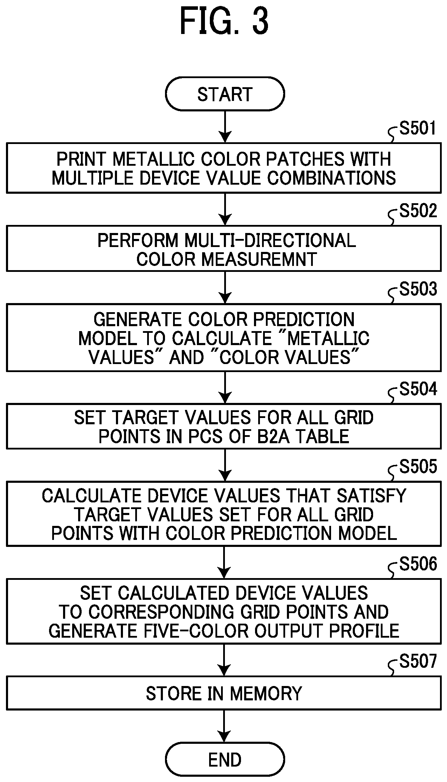

FIGS. 2 and 3 are diagrams each illustrating an overall operation of the image processing system 1000 according to the first embodiment. FIG. 2 is a flowchart illustrating actual printing based on a five-color output profile in the image processing system 1000 according to the first embodiment.

In step S401, the operation unit 300 receives user specification of a print job for a CMYK or RGB image without a spot color specification. In step S402, the operation unit 300 receives print instructions from the user specifying an input profile including Japan Color or sRGB and a five-color output profile of five plates including a silver plate.

In step S403-1, the controller 200 acquires the print job specified by the user. In step S403-2, the controller 200 acquires the input profile and the output profile specified by the user. In step S404, the controller 200 performs color conversion based on the specified input profile and five-color output profile and transmits color-converted image data to the image forming apparatus 400. In step S405, the image forming apparatus 400 receives the image data from the controller 200 and executes printing using five plates or in five separations.

FIG. 3 is a flowchart illustrating a process for generating a five-color output profile in the image processing system 1000 according to the first embodiment. In step S501, the image forming apparatus 400 prints a metallic chart including metallic color patches when the operation unit 300 receives print instructions for the metallic chart for generating a five-color output profile from the user. In step S502, the measuring unit 500 obtains colorimetric values through multi-directional color measurement for all the metallic patches of the printed metallic chart according to user instructions through the operation unit 300.

In step S503, the processing unit 100 receives the colorimetric values acquired by the measuring unit 500 and generates a (color) prediction model to calculate color values and metallic values based on the received colorimetric values. In step S504, the processing unit 100 sets target color values and target metallic values for all the grid points in the PCS of the B2A table of the five-color output profile.

In step S505, the processing unit 100 acquires device values that realize the target color values and target metallic values set for all the grid points in the PCS, with the prediction model acquired in step S503. In step S506, the processing unit 100 sets the device values acquired in step S505 to all the grid points of the B2A table and generates a five-color output profile. In step S507, the processing unit 100 stores the generated five-color output profile in memory.

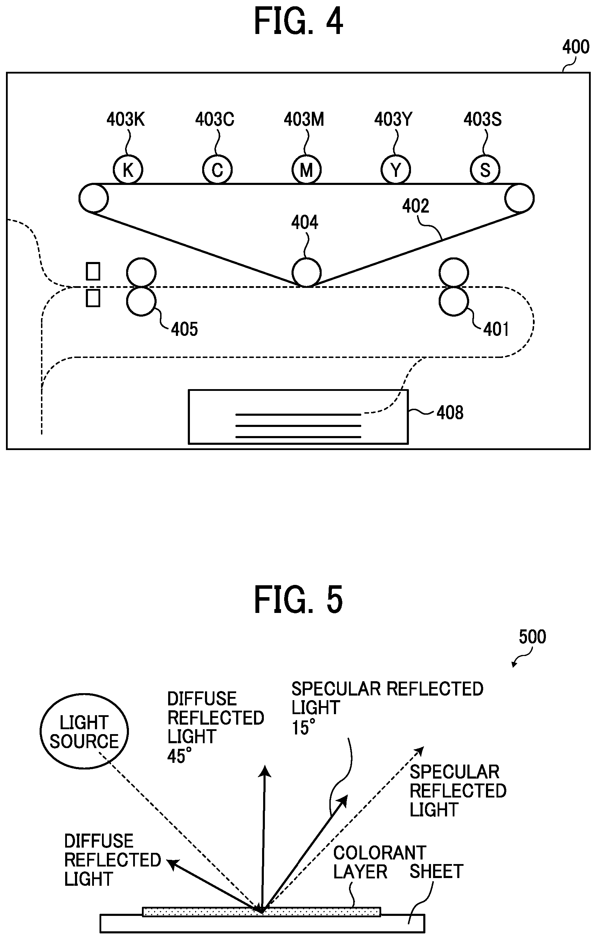

FIG. 4 is a diagram illustrating a hardware configuration of the image forming apparatus 400 in the image processing system 1000 according to the first embodiment. For example, the image forming apparatus 400 includes an intermediate transfer belt 402, multiple photoconductive drums 403S, 403Y, 403M, 403C, and 403K, an input tray 408, a conveyance roller pair 401, a transfer roller 404, and a fixing roller pair 405.

Specifically, in the image forming apparatus 400, the photoconductive drums 403S, 403Y, 403M, 403C, and 403K, which may be referred to as photoconductive drums 403 in the following description, for the respective colors are arranged side by side along the intermediate transfer belt 402 which is an endless mover. In short, the image forming apparatus 400 illustrated in FIG. 4 is a so-called tandem image forming apparatus.

The photoconductive drum 403Y forms a yellow color plate (Y color). The photoconductive drum 403M forms a magenta color (M color). The photoconductive drum 403C forms a cyan color (C color). The photoconductive drum 403K forms a black color (K color). The photoconductive drum 403S forms a special color different from CMYK colors as process colors. Examples of the special color include a metallic color, a fluorescent color such as fluorescent yellow or fluorescent pink, and a special color such as white. Instead of CMYK colors, the process colors may be CMY colors. Instead of CMY colors, the process colors may be red (R), green (G), and blue (B) colors.

A recording medium such as a sheet of paper is fed from the input tray 408 and conveyed by the conveyance roller pair 401. For transfer, the photoconductive drums 403 are arranged side by side along the intermediate transfer belt 402 to transfer images from the photoconductive drums 403 onto the intermediate transfer belt 402 to form intermediate transfer images on the intermediate transfer belt 402. For example, the photoconductive drum 403S, the photoconductive drum 403Y, the photoconductive drum 403M, the photoconductive drum 403C, and the photoconductive drum 403K are arranged side by side in this order in a conveyance direction.

The order in which the photoconductive drums 403 are arranged is not limited to the aforementioned order. For example, the order may be reversed such that the photoconductive drum 403K, the photoconductive drum 403C, the photoconductive drum 403M, the photoconductive drum 403Y, and the photoconductive drum 403S are arranged side by side in this order in the conveyance direction. The special color is not limited to the most downstream position or the most upstream position and may be other positions.

On the surface of each of the photoconductive drums 403, a toner-developed image corresponding to each color is formed. The images of each color are overlaid and transferred onto the intermediate transfer belt 402 to form a full-color image on the intermediate transfer belt 402. The full-color image formed on the intermediate transfer belt 402 is transferred onto the sheet as a recording medium by the function of the transfer roller 404 in the conveyance passage of the sheet, which is indicated by broken lines in FIG. 4. The sheet on which the image has been formed is further conveyed to the fixing roller pair 405, which fixes the image onto the sheet. In other words, the image is formed on the sheet. FIG. 2 illustrates underprinting where the metallic layer is the lowermost layer.

FIG. 5 is a diagram illustrating a hardware configuration of the measuring unit 500 of the image processing system 1000 according to the first embodiment. The measuring unit 500 outputs multiple colorimetric values obtained through multi-directional color measurement of the metallic patches, which are objects to be measured.

Specifically, the measuring unit 500 is a multi-angle spectrophotometer or more specifically, multi-angle spectrocolorimeter. The colorimetric values measured by the measuring unit 500 are spectral reflectance in each direction. As illustrated in FIG. 5, the measuring unit 500 outputs colorimetric values obtained through multi-directional color measurement to acquire metallic values and color values, which will be described later.

For example, the measuring unit 500 measures and outputs colorimetric values of an object to be measured when light is irradiated to the object to be measured in an oblique direction. Specifically, the measuring unit 500 measures and outputs the colorimetric values of the object in a front direction (45°), which is a normal direction of the object to be measured, and in a diffuse light direction (110°) closer to an incident direction of the irradiation light than the front direction (45°). The measuring unit 500 may measure and output a colorimetric value of the object to be measured in a specular reflection direction (from 0° to 15°) with respect to the irradiation light as needed.

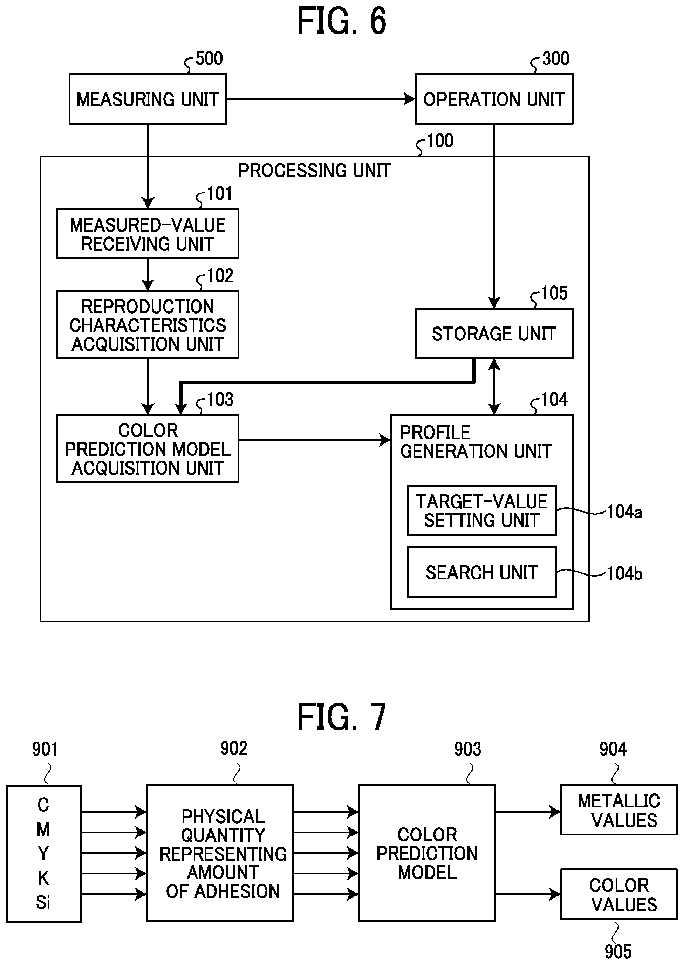

FIG. 6 is a diagram illustrating a functional configuration of the processing unit 100 related to the generation of a five-color output profile in the image processing system 1000 according to the first embodiment. FIG. 7 is a diagram illustrating a color prediction model generated in the image processing system 1000 according to the first embodiment. As illustrated in FIG. 6, the processing unit 100 includes a measured-value receiving unit 101, a reproduction characteristics acquisition unit 102, a color prediction model acquisition unit 103, a profile generation unit 104, and a storage unit 105.

The measured-value receiving unit 101 receives colorimetric values obtained through multi-directional color measurement and output from the measuring unit 500. Specifically, the measured-value receiving unit 101 receives the colorimetric values of metallic patches for generating the five-color output profile to be printed in step S501.

The reproduction characteristics acquisition unit 102 calculates a metallic value and a color value, which are two physical quantities, from the multiple colorimetric values received by the measured-value receiving unit 101 and transmits the metallic value and the color value to the color prediction model acquisition unit 103.

The color prediction model acquisition unit 103 builds a color prediction model including a metallic-value prediction model and a color-value prediction model for a target output sheet based on the device values and transmits the color prediction model to the profile generation unit 104.

The profile generation unit 104 sets a target color value and a target metallic value at a grid point in each Lab color space of the B2A table, calculates an optimal device value using the metallic-value prediction model and the color-value prediction model, and generates a five-color output profile. The profile generation unit 104 transmits the generated five-color output profile to the storage unit 105. Such a configuration allows setting of device values of five plates including a metallic colorant at Lab coordinates in the PCS and allows the user to directly perform the metallic printing from the CMYK or RGB image data by profile conversion.

The storage unit 105 stores the five-color output profile transmitted from the profile generation unit 104.

A detailed description is given below of the reproduction characteristics acquisition unit 102, the color prediction model acquisition unit 103, and the profile generation unit 104, which are included in the processing unit 100.

The reproduction characteristics acquisition unit 102 receives multiple colorimetric values from the measured-value receiving unit 101 and calculates a metallic value and a color value. The metallic value is a physical quantity that quantifies the glossiness of the object measured by the measuring unit 500. The metallic value is typically expressed using colorimetric values obtained through multi-directional color measurement.

The flop index, commonly used for measuring colors with optical anisotropy, is used in the present embodiment. As illustrated in FIG. 5, the flop index is calculated by measuring reflected light at three angles - 15°, 45°, and 110° - with illumination at a 45° angle relative to the surface normal to obtain the lightness (L) values at those angles and normalizing the difference between the L values at 15° and 110° using the L value at 45°. Equation 1 below presents the calculation formula.

$$F.I = 2.69 \cdot \left. (L_{15}^* - L_{110}^*)^{1.11} \middle/ (L_{45}^*)^{0.85} \right. \qquad \cdots (1)$$

The flop index is a physical quantity of which a higher value indicates a higher degree of brightness and gloss. In other words, the metallic degree is high. On the other hand, color values are traditional indicators that use the L, a, and b values at a light receiving angle of 45° to express saturation and depth.

The color prediction model acquisition unit 103 acquires a color prediction model. FIG. 7 is a diagram illustrating a color prediction model. The color prediction model is a model that receives the adhesion amount characteristics of C, M, Y, K, and Si single colors, which are device values of a reproduction printer, as an input and outputs a metallic value and a color value. The color prediction model outputs the flop index presented in Equation 1 as a metallic value and the predicted L, a, b values at a light receiving angle of 45° as a color value.

A method of generating a color prediction model is described below with reference to FIG. 7. The reproduction characteristics acquisition unit 102 acquires the colorimetric values obtained by the measuring unit 500 through multi-directional color measurement by a method as described above with reference to FIG. 5 for patches of C, M, Y, K, and Si values (device values) 901 in various combinations on the metallic chart printed by the image forming apparatus 400 in step S501 of FIG. 3, and selects color measurement values suitable as a physical quantity 902 representing the amount of adhesion of colorants. As a result, a metallic value and a color value are obtained for each patch. In the present embodiment, the flop index presented in Equation 1 corresponds to the metallic value whereas the color value represents the Lab values at 45°.

The color prediction model acquisition unit 103 generates a color prediction model 903 including a metallic-value prediction model and a color-value prediction model based on the acquired values as correct values. Specifically, the color prediction model acquisition unit 103 generates the metallic-value prediction model to acquire metallic values 904 by inputting the C, M, Y, K, and Si values (device values) 901, and generates the color-value prediction model to acquire color values 905 by inputting the C, M, Y, K, and Si values (device values) 901. Functions used in the color prediction model 903 can include multiple regression equations, neural networks, and interpolation using direct lookup tables, which are commonly used functions in color prediction models.

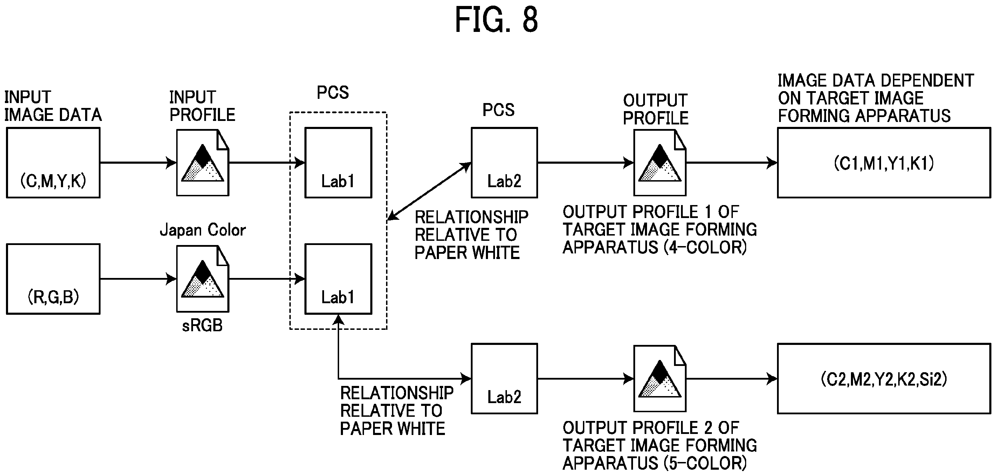

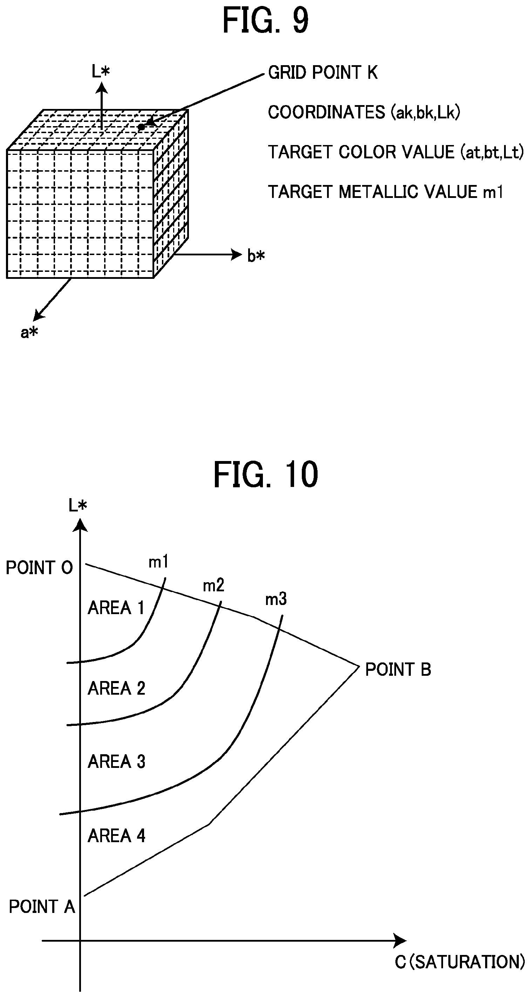

Referring back to FIG. 6, the profile generation unit 104 includes a target-value setting unit 104a and a search unit 104b. The target-value setting unit 104a is described below with reference to FIGS. 8 and 9. FIG. 8 is a diagram illustrating a profile generation process in the image processing system 1000 according to the first embodiment. FIG. 9 is a diagram illustrating grid points represented by Lab coordinates in the PCS of the B2A table generated in the image processing system 1000 according to the first embodiment.

As illustrated in FIG. 8, the printing using profiles involves performing color conversion of input image data of CMYK or RGB components into the PCS (Lab values) using an input profile. The input profile specifies Japan Color when the input image data is CMYK, or the input profile specifies sRGB when the input image data is RGB. The Lab values obtained by the color conversion into the PCS are defined as Lab1. A device-dependent output profile 1 describes the relationship with the device values, which indicate the amount of colorants (C1, M1, Y1, K1) to obtain the Lab values (= Lab2) in the PCS. In the process color printing, Lab1 and Lab2 are in a relationship relative to the paper white. When the input image data indicates (C, M, Y, K) = (0, 0, 0, 0), the device values obtained after the input and output profile conversion, which is color conversion, also indicate (C1, M1, Y1, K1) = (0, 0, 0, 0).

The printer uses a metallic color, which is referred to as silver in the following description, in addition to process colors and performs printing with a metallic effect for highlights through an output profile 2. In other words, the input image data indicates (C, M, Y, K) = (0, 0, 0, 0) whereas the device values to be acquired after the input and output profile conversion, which is color conversion, indicate (C2, M2, Y2, K2, Si2) = (0, 0, 0, 0, 100). In this case, the output profile 2 of five plates needs to be devised. This is because a white point in the PCS is paper white for the input profile, but to be silver after the output profile conversion.

Lab information of a printing sheet is typically recorded at a white point in the PCS of the output profile. This is defined as Lab2 = (90, 0, 0). The Lab2 is a colorimetric value obtained by printing at (C, M, Y, K, Si) = (0, 0, 0, 0, 0). The relationship relative to the paper white is maintained in the PCS in the output profile 2 and the Lab2 is used when the colorimetric values (Lab values) obtained by printing at (C, M, Y, K, Si) = (0, 0, 0, 0, 100) are represented by Lab3 = (70, 0, 0). On the other hand, the device values (C, M, Y, K, Si) = (0, 0, 0, 0, 100) need to be recorded at the grid point corresponding to the paper white. In other words, the color acquired by printing the device values registered in the output profile 2 does not match the Lab values in the PCS of the output profile 2.

To address such a situation, the target-value setting unit 104a sets a target color value and a target metallic value for each grid point. In other words, the target-value setting unit 104a functions as an example of a target-value setting unit that sets a target value for each Lab coordinate, which is an example of a coordinate, of a grid point K in a device-independent color space (for example, a PCS) of a five-color output profile. For example, the target value may include a target color value and a target metallic value which are physical quantities including diffuse reflected light components and regular reflected light components. The Lab coordinates of the grid point K in FIG. 9 are (ak, bk, Lk). When the target color value of the grid point K is (at, bt, Lt), Lt can be expressed as Equation (2) below using the conversion equation from CIE XYZ.

$$L_t = 116f\left(Y \Big/ Y\left((1-\alpha)\cdot Y_{silver} + \alpha\cdot Y_{paper}\right)\right) - 16 \qquad \cdots (2)$$

where: $Y_{silver}$ represents the value Y of a patch printed on a target output sheet in the condition of (C, M, Y, K, Si) = (0, 0, 0, 0, 100) (%), $Y_{paper}$ is the value Y of the patch printed on the target output sheet in the condition of (C, M, Y, K, Si) = (0, 0, 0, 0, 0) (%), and $\alpha$ represents the inner division ratio obtained by dividing $Y_{paper}$ and $Y_{min}$ by $Y_k$. Here, $Y_{paper}$ represents the value Y of the target output sheet, $Y_{min}$ represents the value Y of the lowest lightness point, and $Y_k$ represents the value Y of the grid point K. Also, at = ak and bt = bk. The highlight is more of a silver tint.

In other words, the profile generation unit 104 generates an output profile in which more metallic colorants are allocated to the grid point K on the highlight side than to grid points on the shadow side or the high-saturation side. Thus, both high quality and low cost can be achieved by not using the metallic colorant for a color for which the effect of the metallic colorant is low.

FIG. 10 is a diagram illustrating the setting of a target metallic value in an LC plane in the image processing system 1000 according to the first embodiment. The target-value setting unit 104a sets a lower metallic value in a color gamut of shadow or high saturation. In FIG. 10, the segment from the white point (point O) to the minimum lightness point (point A) and the segment from the white point (point O) to the maximum saturation point (point B) are each divided into four parts, defining areas 1 to 4 with target metallic values m1, m2, and m3 satisfying the relationship of m1 > m2 > m3. In FIG. 10, the metallic values are set to m1 or more in the area 1, m2 or more and m1 or less in the area 2, m3 or more and m2 or less in the area 3, and m3 or less in the area 4.

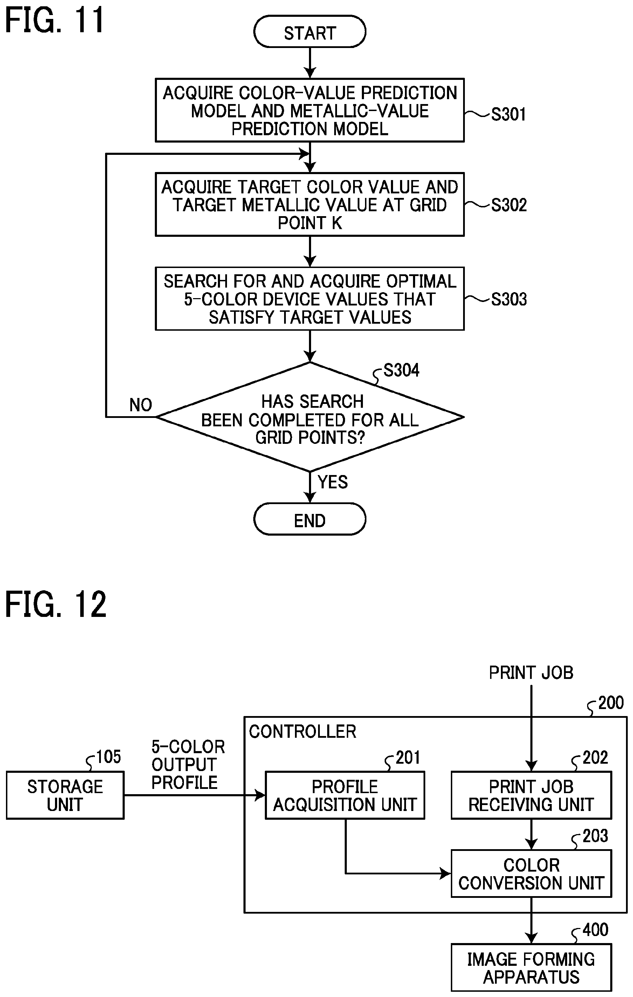

The search unit 104b is described below with reference to FIG. 11. FIG. 11 is a flowchart illustrating a process performed by the search unit 104b in the image processing system 1000 according to the first embodiment. In step S301, the search unit 104b acquires a metallic-value prediction model and a color-value prediction model transmitted from the color prediction model acquisition unit 103. In step S302, the search unit 104b acquires a target color value and a target metallic value at each grid point K represented by Lab coordinates in the PCS of the B2A table set by the target-value setting unit 104a.

In step S303, the search unit 104b sets the metallic value and the color value of the target color as inputs, and searches for and acquires the optimal five-color device values that satisfy the set values. The search condition may include a device value that satisfies a metallic value within the target range and the minimum color difference in color values. In step S304, the search unit 104b determines whether the search for the five-color device values has been completed for all the grid points of the B2A table. When the search has not been completed for all the grid points (NO in step S304), the search unit 104b returns to step S302. By contrast, when the search is completed for all the grid points (YES in step S304), the search unit 104b ends the search for the five-color device values. In other words, the search unit 104b functions as an example of a device-value acquisition unit that acquires device values of five or more colors that reproduce target values including a target color value and a target metallic value.

Finally, the search unit 104b sets the searched device value to each grid point K represented by Lab coordinates in the PCS of the B2A table and generates a five-color output profile. The search unit 104b transmits the generated five-color output profile to the storage unit 105.

FIG. 12 is a diagram illustrating a part of a functional configuration of the controller 200 in the image processing system 1000 according to the first embodiment. As illustrated in FIG. 12, the controller 200 includes a profile acquisition unit 201, a print job receiving unit 202, and a color conversion unit 203.

The profile acquisition unit 201 acquires an input profile and a five-color output profile stored in the storage unit 105 of the processing unit 100 and transmits the profiles to the color conversion unit 203. In other words, the profile acquisition unit 201 functions as an example of an input profile specification unit that specifies an input profile and an example of an output profile specification unit that specifies an output profile.

The print job receiving unit 202 receives a print job including image data and transmits the print job to the color conversion unit 203. In other words, the print job receiving unit 202 is an example of an acquisition unit that acquires a print job.

The color conversion unit 203 separates the image data included in the print job for each colorant based on the input profile and the five-color output profile and transmits the separated image data to the image forming apparatus 400. In other words, the color conversion unit 203 functions as an example of a generation unit that separates a print job (print data) into five or more plates including a metallic colorant based on the input profile and the five-color output profile to generate data for a printed material. For example, the color conversion unit 203 may generate an output profile using the device values acquired by the search unit 104b and Lab coordinates in the PCS. Thus, data for a metallic printed material can be easily generated without a spot color specification.

As described above, in the generation of a five-color output profile in the image processing system 1000 according to the first embodiment, a metallic value and a color value are acquired from multiple colorimetric values obtained by the measuring unit 500, a color prediction model is acquired, a target color value and a target metallic value are set for each grid point represented by Lab coordinates in the PCS of the B2A table, the device valued satisfying the target color value and the target metallic value are acquired, and a five-color output profile can be generated using the Lab coordinates and the device values.

Further, using the five-color output profile and the input profile generated in the first embodiment in combination enables color separation into five plates on the image forming apparatus 400 and facilitates metallic printing.

Second Embodiment

On a UI, the user selects print data on a UI to indicate that metallic printing is to be performed or sets an input profile or a five-color output profile. A redundant description of configurations similar to those in the first embodiment will be omitted unless otherwise required.

The operation unit 300 functions as an example of a user interface that receives specifications for a print job, an input profile, and a five-color output profile. The profile acquisition unit 201 specifies an input profile and an output profile according to the input profile and the five-color output profile input through the operation unit 300.

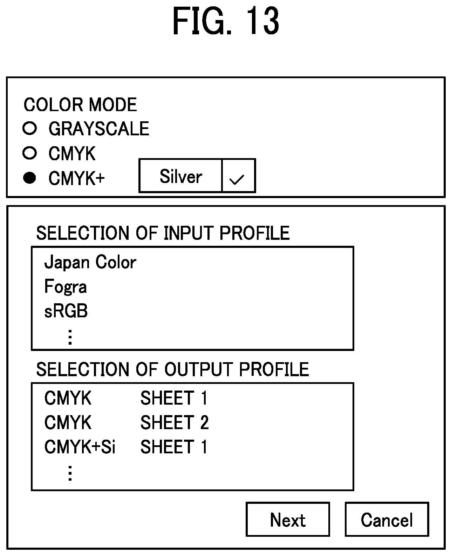

FIG. 13 is a diagram illustrating a UI in an image processing system according to the second embodiment. FIG. 13 corresponds to a screen displayed in step S402 in the flowchart illustrated in FIG. 2. The user selects, on the screen, an input profile and an output profile and sets the toner of the fifth color provided for a toner station including the photoconductive drum 403S illustrated in FIG. 6.

As described above, the image processing system according to the second embodiment can provide the same effects as those of the first embodiment.

Although the measured-value receiving unit 101, the reproduction characteristics acquisition unit 102, the color prediction model acquisition unit 103, the profile generation unit 104, the profile acquisition unit 201, the print job receiving unit 202, and the color conversion unit 203 are in the processing unit 100 or the controller 200 outside the image forming apparatus 400, these units may be inside the image forming apparatus 400.

The programs executed by the image processing system are pre-installed in read-only memory (ROM) or similar media and provided. The programs executed by the image processing system may be recorded in a file format that is either installable or executable by a computer, on a computer-readable recording medium such as a compact disc-read-only memory (CD-ROM), a flexible disk (FD), a compact disc-recordable (CD-R), or a digital versatile disk (DVD).

The programs executed by the image processing system may be stored on a computer connected to a network, such as the Internet, and provided by allowing the programs to be downloaded through the network. The programs executed by the image processing system may be provided or distributed through a network such as the Internet.

The programs executed by the image processing system are structured as modules including the above-described units such as the measured-value receiving unit 101, the reproduction characteristics acquisition unit 102, the color prediction model acquisition unit 103, the profile generation unit 104, the profile acquisition unit 201, the print job receiving unit 202, and the color conversion unit 203.

In actual hardware, a processor such as a central processing unit (CPU) reads and executes a program from the ROM to load the above-described units onto the main memory, and generates the measured-value receiving unit 101, the reproduction characteristics acquisition unit 102, the color prediction model acquisition unit 103, the profile generation unit 104, the profile acquisition unit 201, the print job receiving unit 202, and the color conversion unit 203 on the main memory.

The image forming apparatus has been described as a multifunction peripheral (MFP) having at least two of copying, printing, scanning, and facsimile functions. However, the present disclosure can be applied to any image forming apparatus, such as a copier, printer, scanner, or facsimile machine.

A description is given below of several aspects of the present disclosure.

According to a first aspect, an image processing system that generates and prints plates with five or more colors including a metallic colorant from an input image that has continuously changing gradation includes an acquisition unit, an input profile specification unit, an output profile specification unit, a generation unit, and an image output apparatus. The acquisition unit acquires print data of CMYK or RGB without a spot color specification. The input profile specification unit specifies an input profile to convert the print data into a color value in a device-independent space. The output profile specification unit specifies an output profile for the metallic colorant. The generation unit separates the print data into five or more plates including the metallic colorant based on the specified input profile and the specified output profile to generate data for a printed material. The image output apparatus outputs the printed material.

According to a second aspect, the image processing system of the first aspect further includes a target-value setting unit and a device-value acquisition unit. The target-value setting unit sets a target value for each coordinate of grid points in a device-independent color space of the output profile. The device-value acquisition unit acquires a device value of five or more colors that reproduces the target value. The generation unit generates the output profile based on the acquired device value and the coordinate. The target value is a physical quantity including a diffuse reflected light component and a specular reflected light component.

According to a third aspect, in the image processing system of the second aspect, the metallic colorant is allocated to a grid point on a highlight side of the grid points more than to a grid point on a shadow side or a high-saturation side of the grid points in the output profile.

According to a fourth aspect, the image processing system of any one of the first to third aspects further includes a user interface that receives specifications for the print data, the input profile, and the output profile.

According to a fifth aspect, an output profile is generated by the image processing system of the second aspect.

According to a sixth aspect, an image output device includes the units of any one of the first to fourth aspects.

According to a seventh aspect, an image processing method, executed by an image processing system that generates and prints plates with five or more colors including a metallic colorant from an input image that has continuously changing gradation, includes: acquiring print data of CMYK or RGB without a spot color specification, specifying an input profile to convert the print data into a color value in a device-independent space, specifying an output profile for the metallic colorant, and separating the print data into five or more plates including the metallic colorant based on the specified input profile and the specified output profile to generate data for a printed material.

According to an eighth aspect, a program causes a computer to function as an acquisition unit, an input profile specification unit, an output profile specification unit, and a generation unit. The computer controls an image processing system that generates and prints plates with five or more colors including a metallic colorant from an input image that has continuously changing gradation. The acquisition unit acquires print data of CMYK or RGB without a spot color specification. The input profile specification unit specifies an input profile to convert the print data into a color value in a device-independent space. The output profile specification unit specifies an output profile for the metallic colorant. The generation unit separates the print data into five or more plates including the metallic colorant based on the specified input profile and the specified output profile to generate data for a printed material.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc-read-only memory (CD-ROM), a magnetic tape device, or a solid state memory device.

**Claims**

1.  An image processing system (1000) comprising:

    an acquisition unit (202) configured to acquire print data of cyan, magenta, yellow, and black (CMYK) or red, green, and blue (RGB) without a spot color specification;
    an input profile specification unit (201) configured to specify an input profile to convert the print data into a color value in a device-independent space;
    an output profile specification unit (201) configured to specify an output profile for a metallic colorant;
    a generation unit (203) configured to separate the print data into five or more plates including the metallic colorant based on the specified input profile and the specified output profile to generate data for a printed material; and
    an image output apparatus (400) configured to output the printed material.

2.  The image processing system (1000) according to claim 1, further comprising:

    a target-value setting unit (104a) configured to set a target value for each coordinate of grid points in a device-independent color space of the output profile; and
    a device-value acquisition unit (104b) configured to acquire a device value of five or more colors that reproduces the target value,
    wherein the generation unit (203) is configured to generate the output profile based on the acquired device value and the coordinate, and the target value is a physical quantity including a diffuse reflected light component and a specular reflected light component.

3.  The image processing system (1000) according to claim 2,
    wherein the metallic colorant is allocated to a grid point on a highlight side of the grid points more than to a grid point on a shadow side or a high-saturation side of the grid points in the output profile.

4.  The image processing system (1000) according to any one of claims 1 to 3, further comprising a user interface (300) configured to receive specifications for the print data, the input profile, and the output profile.

5.  An output profile (2) generated by the image processing system (1000) according to claim 2.

6.  An image output apparatus (400) comprising:

    an acquisition unit (202) configured to acquire print data of CMYK or RGB without a spot color specification;
    an input profile specification unit (201) configured to specify an input profile to convert the print data into a color value in a device-independent space;
    an output profile specification unit (201) configured to specify an output profile for a metallic colorant; and
    a generation unit (203) configured to separate the print data into five or more plates including the metallic colorant based on the specified input profile and the specified output profile to generate data for a printed material.

7.  An image processing method comprising:

    acquiring (S403-1) print data of CMYK or RGB without a spot color specification;
    specifying (S403-2) an input profile to convert the print data into a color value in a device-independent space;
    specifying (S403-2) an output profile for a metallic colorant; and
    separating (S404) the print data into five or more plates including the metallic colorant based on the specified input profile and the specified output profile to generate data for a printed material.

8.  A carrier medium carrying computer-readable code for controlling a computer system to carry out a method, the method comprising:

acquiring (S403-1) print data of CMYK or RGB without a spot color specification;
specifying (S403-2) an input profile to convert the print data into a color value in a device-independent space;
specifying (S403-2) an output profile for a metallic colorant; and
separating (S404) the print data into five or more plates including the metallic colorant based on the specified input profile and the specified output profile to generate data for a printed material.

# FIG. 1

1000

```
┌──────────┐   ┌──────────┐   ┌──────────┐
│  ⌐200    │   │  ⌐300    │   │  ⌐100    │
│CONTROLLER│   │OPERATION │   │PROCESSING│
│          │   │  UNIT    │   │  UNIT    │
└────┬─────┘   └────┬─────┘   └────┬─────┘
     │              │              │
─────┼──────────────┼──────────────┼──────── NETWORK
     │              │              │
   ┌─┴────────┐   ┌─┴────────┐
   │  ⌐400    │   │  ⌐500    │
   │  IMAGE   │   │          │
   │ FORMING  │   │MEASURING │
   │APPARATUS │   │  UNIT    │
   └──────────┘   └──────────┘
```

# FIG. 2

```
        ┌─────────────┐
        │   START     │
        └──────┬──────┘
               │           ⌐S401
        ┌──────▼──────────────┐
        │   RECEIVE USER      │
        │ SPECIFICATION OF    │
        │    PRINT JOB        │
        └──────┬──────────────┘
               │           ⌐S402
        ┌──────▼──────────────┐
        │ RECEIVE PRINT       │
        │ INSTRUCTIONS FROM   │
        │ USER SPECIFYING     │
        │ INPUT PROFILE AND   │
        │ OUTPUT PROFILE      │
        └──────┬──────────────┘
               │           ⌐S403-1
        ┌──────▼──────────────┐
        │  ACQUIRE PRINT JOB  │
        └──────┬──────────────┘
               │           ⌐S403-2
        ┌──────▼──────────────┐
        │ ACQUIRE INPUT       │
        │ PROFILE AND         │
        │ OUTPUT PROFILE      │
        └──────┬──────────────┘
               │           ⌐S404
        ┌──────▼──────────────┐
        │ PERFORM COLOR       │
        │ CONVERSION AND      │
        │ TRANSMIT COLOR-     │
        │ CONVERTED IMAGE     │
        │ DATA TO IMAGE       │
        │ FORMING APPARATUS   │
        └──────┬──────────────┘
               │           ⌐S405
        ┌──────▼──────────────┐
        │      PRINT          │
        └──────┬──────────────┘
               │
        ┌──────▼──────┐
        │    END      │
        └─────────────┘
```

# FIG. 3

START

S501
PRINT METALLIC COLOR PATCHES WITH
MULTIPLE DEVICE VALUE COMBINATIONS

S502
PERFORM MULTI-DIRECTIONAL
COLOR MEASUREMNT

S503
GENERATE COLOR PREDICTION
MODEL TO CALCULATE "METALLIC
VALUES" AND "COLOR VALUES"

S504
SET TARGET VALUES FOR ALL GRID
POINTS IN PCS OF B2A TABLE

S505
CALCULATE DEVICE VALUES THAT SATISFY
TARGET VALUES SET FOR ALL GRID
POINTS WITH COLOR PREDICTION MODEL

S506
SET CALCULATED DEVICE VALUES
TO CORRESPONDING GRID POINTS AND
GENERATE FIVE-COLOR OUTPUT PROFILE

S507
STORE IN MEMORY

END

# FIG. 4

400

403K   403C   403M   403Y   403S

(K)    (C)    (M)    (Y)    (S)

402

404

405

401

408

# FIG. 5

500

LIGHT SOURCE

DIFFUSE REFLECTED LIGHT 45°

SPECULAR REFLECTED LIGHT 15°

SPECULAR REFLECTED LIGHT

DIFFUSE REFLECTED LIGHT

COLORANT LAYER   SHEET

# FIG. 6

MEASURING UNIT ⌐500

OPERATION UNIT ⌐300

⌐100
PROCESSING UNIT

MEASURED-VALUE RECEIVING UNIT ⌐101

REPRODUCTION CHARACTERISTICS ACQUISITION UNIT ⌐102

STORAGE UNIT ⌐105

COLOR PREDICTION MODEL ACQUISITION UNIT ⌐103

PROFILE GENERATION UNIT ⌐104

TARGET-VALUE SETTING UNIT — 104a

SEARCH UNIT — 104b

# FIG. 7

901

C
M
Y
K
Si

902

PHYSICAL QUANTITY REPRESENTING AMOUNT OF ADHESION

903

COLOR PREDICTION MODEL

904

METALLIC VALUES

COLOR VALUES

905

# FIG. 8

INPUT IMAGE DATA

INPUT PROFILE

PCS

PCS

OUTPUT PROFILE

IMAGE DATA DEPENDENT ON TARGET IMAGE FORMING APPARATUS

(C,M,Y,K)

Lab1

Lab2

(C1,M1,Y1,K1)

RELATIONSHIP RELATIVE TO PAPER WHITE

OUTPUT PROFILE 1 OF TARGET IMAGE FORMING APPARATUS (4-COLOR)

Japan Color

(R,G,B)

Lab1

sRGB

RELATIONSHIP RELATIVE TO PAPER WHITE

Lab2

(C2,M2,Y2,K2,Si2)

OUTPUT PROFILE 2 OF TARGET IMAGE FORMING APPARATUS (5-COLOR)

EP 4 668 728 A1

# FIG. 9

GRID POINT K

COORDINATES $(a_k, b_k, L_k)$

TARGET COLOR VALUE $(a_t, b_t, L_t)$

TARGET METALLIC VALUE m1

$L*$

$b*$

$a*$

# FIG. 10

$L*$

POINT O

m1

m2

m3

AREA 1

AREA 2

AREA 3

AREA 4

POINT B

POINT A

C (SATURATION)

# FIG. 11

```
            ( START )
                |
                v
  ACQUIRE COLOR-VALUE PREDICTION
  MODEL AND METALLIC-VALUE         ~S301
  PREDICTION MODEL
                |
                v
  ACQUIRE TARGET COLOR VALUE AND
  TARGET METALLIC VALUE AT GRID    ~S302
  POINT K
                |
                v
  SEARCH FOR AND ACQUIRE OPTIMAL
  5-COLOR DEVICE VALUES THAT       ~S303
  SATISFY TARGET VALUES
                |
                v              S304
        /  HAS SEARCH  \
  NO   < BEEN COMPLETED FOR ALL >
        \  GRID POINTS?  /
                |
               YES
                v
            ( END )
```

# FIG. 12

```
                                        PRINT JOB
                                            |
                                            v
                         CONTROLLER                        (200
                                    (201              (202
            5-COLOR
            OUTPUT                PROFILE          PRINT JOB
  (105      PROFILE          ACQUISITION UNIT   RECEIVING UNIT
  STORAGE   ------->                                   |
  UNIT                             |                    v     (203
                                   |                COLOR
                                   +----------->  CONVERSION UNIT
                                                       |
                                                       v      (400
                                                  IMAGE FORMING
                                                   APPARATUS
```

# FIG. 13

COLOR MODE

○ GRAYSCALE

○ CMYK

● CMYK+ | Silver | ✓ |

SELECTION OF INPUT PROFILE

Japan Color
Fogra
sRGB
⋮

SELECTION OF OUTPUT PROFILE

CMYK        SHEET 1
CMYK        SHEET 2
CMYK+Si    SHEET 1
⋮

| Next | | Cancel |

**EUROPEAN SEARCH REPORT**

Europäisches
Patentamt
European
Patent Office
Office européen
des brevets

**Application Number**

EP 25 17 8910

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/268193 A1 (CHOULET LUC [FR]) 18 September 2014 (2014-09-18) | 1,4,6-8 | INV.<br>H04N1/54 |
| Y | * paragraph [0051] - paragraph [0091]; | 2,5 | |
| A | figures 1, 3, 11 * | 3 | |
| | ----- | | |
| Y | WO 2023/076034 A1 (EASTMAN KODAK CO [US]) 4 May 2023 (2023-05-04) | 2,5 | |
| A | * page 24; figure 6 * | 1,3,4, 6-8 | |
| | ----- | | |
| A | US 2022/242156 A1 (BAILEY MARTIN [GB]) 4 August 2022 (2022-08-04) * paragraph [0019] - paragraph [0053] * ----- | 1-8 | |

**TECHNICAL FIELDS SEARCHED (IPC)**

H04N
G06K

The present search report has been drawn up for all claims

| Place of search | Date of completion of the search | Examiner |
|---|---|---|
| The Hague | 7 November 2025 | Lauritzen, Jan |

## ANNEX TO THE EUROPEAN SEARCH REPORT
## ON EUROPEAN PATENT APPLICATION NO.

EP 25 17 8910

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2025

| Patent document cited in search report | | Publication date | Patent family member(s) | | Publication date |
|---|---|---|---|---|---|
| US 2014268193 | A1 | 18-09-2014 | EP | 2973232 A2 | 20-01-2016 |
| | | | US | 2014268193 A1 | 18-09-2014 |
| | | | US | 2017126932 A1 | 04-05-2017 |
| | | | US | 2020068096 A1 | 27-02-2020 |
| | | | WO | 2014144118 A2 | 18-09-2014 |
| WO 2023076034 | A1 | 04-05-2023 | EP | 4424005 A1 | 04-09-2024 |
| | | | WO | 2023076034 A1 | 04-05-2023 |
| US 2022242156 | A1 | 04-08-2022 | NONE | | |

EPO FORM P0459

For more details about this annex : see Official Journal of the European Patent Office, No. 12/82

**EP 4 668 728 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022178256 A